# EUROPÄISCHE PATENTSCHRIFT

(11) **EP 1 428 830 B1**
(45) Veröffentlichungstag und Bekanntmachung des Hinweises auf die Patenterteilung: **19.10.2005**
(21) Anmeldenummer: 03027880.8
(22) Anmeldetag: 04.12.2003
(51) Int. Cl.: C07F 7/08, C07F 7/21, C08G 77/38

(54) **Alkinolgruppen aufweisende Organopolysiloxane sowie deren Verwendung in vernetzbaren Massen**
Alkynol group containing organopolysiloxanes and their use in crosslinkable compositions
Organopolysiloxanes contenant des groupes alcynoles et leur utilisation dans les compositions réticulables

(30) Priorität: 12.12.2002 DE 10258126
(43) Veröffentlichungstag der Anmeldung: 16.06.2004
(73) Patentinhaber: Wacker-Chemie GmbH, 81737 München (DE)
(72) Erfinder: Fehn, Armin, Dr., 84561 Mehring (DE)
(74) Vertreter: Budczinski, Angelika

(56) Entgegenhaltungen:
- EP-A- 0 490 523
- DE-B- 1 669 965
- US-A- 4 329 275
- US-A- 5 945 475
- YOSHIMURA F ET AL: "Synthetic study of kedarcidin chromophore: atropselective construction of the ansamacrolide" TETRAHEDRON LETTERS, Bd. 40, Nr. 47, 19. November 1999 (1999-11-19), Seiten 8281-8285, XP004188427 ISSN: 0040-4039
- MAGRIOTIS P A ET AL: "A novel approach to the synthesis of enediynes" TETRAHEDRON LETTERS, Bd. 32, Nr. 43, 1991, Seiten 6085-6088, XP002272595 ISSN: 0040-4039
- GOODING O W ET AL: "Enantioselective formation of functionalized 1 3-disubstituted allenes synthesis of alpha allenic omega carbomethoxy alcohols of high optical purity" JOURNAL OF ORGANIC CHEMISTRY, Bd. 56, Nr. 3, 1991, Seiten 1083-1088, XP002272596 ISSN: 0022-3263
- GUANTI G ET AL: "Synthesis of 4 vinyl substituted beta lactams of the oxamazin family" TETRAHEDRON, Bd. 44, Nr. 12, 1988, Seiten 3685-3692, XP002272597 ISSN: 0040-4020
- BOUTIN R H ET AL: "Alpha amino acid derivatives as chiral educts for asymmetric products synthesis of sphingosine from alpha'-amino-alpha, beta-ynones" JOURNAL OF ORGANIC CHEMISTRY, Bd. 51, Nr. 26, 1986, Seiten 5320-5327, XP002272598 ISSN: 0022-3263

## Beschreibung

Die vorliegende Erfindung betrifft Alkinolgruppen aufweisende Organopolysiloxane Verfahren zu deren Herstellung, deren Verwendung in durch Anlagerung von Si-gebundenem Wasserstoff an aliphatische Kohlenstoff-Kohlenstoff-Mehrfachbindung vernetzbare Siliconmassen sowie daraus hergestellte Formkörper.

Additionsvernetzende Siliconmassen vernetzen durch Reaktion aliphatisch ungesättigter Gruppen mit Si-gebundenem Wasserstoff (Hydrosilylierung) in Gegenwart eines Katalysators, typischerweise einer Platin-Verbindung. Nach Vermischen der Komponenten wird zwar eine gebrauchsfertige Masse erhalten, doch weist diese nur eine eng begrenzte Topfzeit (=Verarbeitungszeit) bei Raumtemperatur auf, da die Vernetzungsreaktion bereits bei Raumtemperatur einsetzt. Dies macht einerseits eine sich rasch anschließende Verarbeitung erforderlich, andererseits auch ein häufiges Reinigen der Vorratsbehälter, Dosieranlagen, Verarbeitungsmaschinen etc., da das z.B. durch Rückvermischung oder Wandhaftung verbleibende Material schließlich vergelt. Es hat deshalb nicht an Versuchen gefehlt, um mit sogenannten Inhibitoren ein vorzeitiges Einsetzen der Vernetzungsreaktion, die normalerweise auch bei Raumtemperatur abläuft, zu unterbinden. Möglichkeiten zur gezielten Einstellung (Verlängerung) der Topfzeit einer additionsvernetzenden Masse sind bekannt, z.B. durch die Verwendung von Inhibitoren, welche die Aktivität des Platinkatalysators bei Raumtemperatur erheblich herabzusetzen vermögen, wie beispielsweise Phosphorverbindungen in Kombination mit Peroxiden gemäß US-A-4,329,275 und Azodicarbonylverbindungen gemäß EP-A-490 523. Diese Art von Inhibitoren beruht darauf, dass "Platingifte", wie Stickstoff-, Phosphor- bzw. Schwefelverbindungen der additionsvernetzenden Masse zugesetzt werden. Damit lässt sich zwar die Topfzeit bei Raumtemperatur z.T. beachtlich verlängern, doch ist mit zunehmender Topfzeit auch eine nachteilige Beeinflussung des Vernetzungsverhalten untrennbar verbunden. D.h. die Vernetzungsgeschwindigkeiten nehmen auch bei erhöhten Temperaturen erheblich ab, was wiederum bedeutet, dass die Vernetzung länger dauert, wodurch wiederum die Fertigungskosten steigen.

Eine andere Art von Inhibitoren sind die organischen Verbindungen oder Organosiliciumverbindungen mit mindestens einer -C≡C-Gruppe gemäß DE-B-1 669 965. Hierin werden u.a. Alkinylalkohole und Alkinyloxysilane als Inhibitoren beschrieben. Diese haben den Vorteil, dass die Vernetzungscharakteristik bei erhöhten Temperaturen nicht so negativ beeinflusst wird, wie bei den zuvor erwähnten Inhibitoren, allerdings sind auch hier wieder entweder die Topfzeiten als Film an Luft und/oder im Bulk zu kurz oder die Vernetzungsgeschwindigkeit zu langsam. Außerdem haben die Inhibitoren, da es sich um monomere Verbindungen handelt, einen relativ niedrigen Siedepunkt und damit einen hohen Dampfdruck, so dass bereits während der Lagerung Inhibitor abdampfen kann und damit die Topfzeit negativ beeinflusst wird. Im US-A 5,945,475 wird nun die Verwendung eines Alkinylalkohols in Kombination mit einem linearen Siloxan, welches Alkoxygruppen mit aliphatischen Dreifachbindungen enthält, beschrieben. Hier werden Alkinole mit Siloxanen derart umgesetzt, dass im Endprodukt keine freie Hydroxygruppe mehr vorkommt, da das Alkinol über die Hydroxygruppe an das Siloxan gebunden ist. Es handelt sich hierbei um Siloxane mit Alkinoxy-Gruppen. Nachteile sind, dass zweierlei Inhibitoren gemischt werden müssen und dass ein Inhibitor davon ein relativ flüchtiges monomeres Alkinol mit den oben beschriebenen Problemen ist und dass die Inhibierungswirkung der Alkinoxygruppen-haltigen Siloxane nur sehr schwach ist (siehe US-A 5,945,475, Vergleichsbeispiel 2). Daraus resultiert, dass auch hier das Verhältnis von Topfzeit bei Raumtemperatur bzw. Dünnschichttopfzeit zu Vernetzungsgeschwindigkeit nicht optimal ist.

Gegenstand der vorliegenden Erfindung sind Alkinolgruppen aufweisende Organopolysiloxane enthaltend Einheiten der Formel 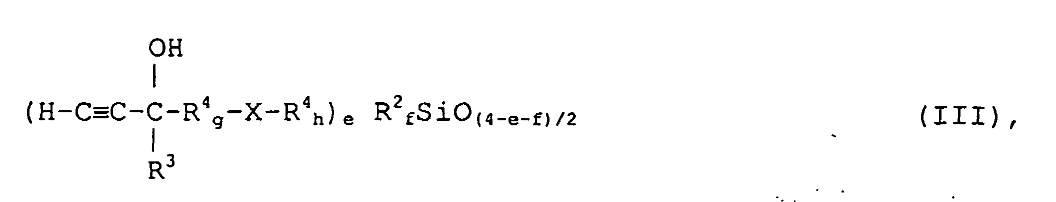 wobei
- **R**^{**2**}: gleich oder verschieden sein kann und Wasserstoffatom, Reste -OR⁵ oder gegebenenfalls substituierte Kohlenwasserstoffreste bedeutet,
- **R**^{**3**}: gleich oder verschieden sein kann und Wasserstoffatom, Halogenatom, Reste -OR⁵ oder einwertige, gegebenenfalls substituierte Kohlenwasserstoffreste bedeutet,
- **R**^{**4**}: gleich oder verschieden sein kann und ein zweiwertiger organischer Rest ist,
- **X**: gleich oder verschieden sein kann und -O-, -S-, -OC(=O)-, -N(R⁶)- oder -N(R⁶)-C(=O)- ist,
- **R**^{**5**}: gleich oder verschieden sein kann und Wasserstoffatom oder einwertige, gegebenenfalls substituierte Kohlenwasserstoffreste bedeutet,
- **R**^{**6**}: gleich oder verschieden sein kann und Wasserstoffatom oder einwertige, gegebenenfalls substituierte Kohlenwasserstoffreste bedeutet,
- **e**: 0, 1, 2 oder 3 ist,
- **f**: 0, 1, 2 oder 3 ist,
- **g**: 0 oder eine ganze Zahl ist und
- **h**: 0 oder eine ganze Zahl bedeutet,
mit der Maßgabe, dass die Summe e+f kleiner oder gleich 3 ist und die Organosiliciumverbindung mindestens eine Einheit der Formel (III) mit e verschieden Null aufweist.

Im Rahmen der vorliegenden Erfindung sollen von dem Begriff Organopolysiloxane sowohl polymere, oligomere wie auch dimere Siloxane mitumfaßt werden.

Falls es sich bei den Resten R², R³ und R⁴ um substituierte Kohlenwasserstoffreste handelt, sind als Substituenten Halogenatome, wie F, Cl, Br und J, Cyanoreste, -NR⁶₂, O, S, N und P sowie Gruppen -OR⁶ bevorzugt, wobei R⁶ die oben dafür angegebene Bedeutung hat.

Beispiele für R² sind die Beispiele wie sie für R und R¹ unten aufgeführt sind.

Bevorzugt handelt es sich bei Rest R² um Wasserstoffatom, -OCH₃, -OCH₂CH₃ oder gegebenenfalls substituierte Kohlenwasserstoffreste mit 1 bis 24 Kohlenstoffatomen, besonders bevorzugt um Wasserstoffatom oder gegebenenfalls substituierte Kohlenwasserstoffreste mit 1 bis 8 Kohlenstoffatomen, insbesondere um den Phenyl-, 3,3,3-Trifluorpropyl- und den Methylrest.

Beispiele für R³ sind Alkylreste, wie der Methyl-, Ethyl-, n-Propyl-, iso-Propyl-, 1-n-Butyl-, 2-n-Butyl-, iso-Butyl-, tert. Butyl-, n-Pentyl-, iso-Pentyl, neo-Pentyl-, tert.-Pentylrest, Hexylreste, wie der n-Hexylrest, Heptylreste, wie der n- Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Ethinyl, Vinyl-, Allyl-, 5-Hexenyl-, 7-Octenyl-, Cyclohexenyl- und Styrylrest, Arylreste, wie Phenylreste, o-,m-,p-Tolylreste, Xylylreste und Ethylphenylreste, Aralkylreste, wie der Benzylrest und der α- und β-Phenylethylrest.

Weitere Beispiele für R³ sind Hydroxy-, Methoxy-, Ethoxy-, Isopropoxy-, Butoxy- und Phenoxyreste.

Beispiele für halogenierte Reste R³ sind Halogenalkylreste, wie der 3,3,3-Trifluor-n-propylrest, der 2,2,2,2',2',2',-Hexafluorisopropylrest, der Heptafluorisopropylrest und Halogenarylreste, wie der o-, m-, und p-Chlorphenylrest.

Bevorzugt handelt es sich bei Rest R³ um Wasserstoffatom, Rest -OR⁵ mit R⁵ gleich der obengenannten Bedeutung oder Kohlenwasserstoffreste mit 1 bis 24 Kohlenstoffatomen, besonders bevorzugt um Wasserstoffatom, Hydroxyrest, Methoxyrest sowie Kohlenwasserstoffreste mit 1 bis 8 Kohlenstoffatomen, insbesondere um Wasserstoffatom, den Methylrest, den Phenylrest und den Ethylrest.

Beispiele für R⁴ sind zweiwertige Reste, wie -CH₂-, -CH(CH₃)-, -C(CH₃)₂-, -CH(CH₃)-CH₂-, -C₆H₄-, -CH(Ph)-CH₂-, -C(CF₃)₂-, -(CH₂)ₙ-C₆H₄-(CH₂)ₙ-, -(CH₂)ₙ-C₆H₄-C₆H₄-(CH₂)ₙ-, -(CH₂O)ₘ-, -OC(=O)-(CH₂)ₙ-, -(CH₂)ₙ-, -(CH₂CH₂O)ₘ- und -(CH₂)ₙ-Oₓ-C₆H₄-SO₂-C₆H₄-Oₓ-(CH₂)ₙ-, wobei x 0 oder 1 ist, n und m gleiche oder verschiedene ganze Zahlen von 0 bis 10 sind sowie Ph gleich Phenylrest ist.

Bevorzugt handelt es sich bei Rest R⁴ um zweiwertige organische Reste mit 1 bis 24 Kohlenstoffatomen, besonders bevorzugt um -CH₂-, -(CH₂)₃-, -C₆H₄- und -CH(CH₃)-, insbesondere um -CH₂-, C₆H₄₋ und -(CH₂)₃-.

Beispiele für Rest R⁵ sind die für R³ angegebenen Beispiele, wobei Wasserstoffatom und Kohlenwasserstoffreste mit 1 bis 24 Kohlenstoffatomen bevorzugt und Wasserstoffatom und der Methyl-, 2-Ethylhexyl- und Phenylrest besonders bevorzugt sind.

Beispiele für Rest R⁶ sind die für R³ angegebenen Beispiele. Bevorzugt handelt es sich bei R⁶ um Wasserstoffatom und Kohlenwasserstoffreste mit 1 bis 20 Kohlenstoffatomen, besonders bevorzugt um Wasserstoffatom und Kohlenwasserstoffreste mit 1 bis 8 Kohlenstoffatomen, insbesondere um Wasserstoffatom, den Methyl- und den Ethylrest.

Bevorzugt handelt es sich bei Rest X um -O-, -OC(=O)- oder -N(R⁶)-C(=O)- mit R⁶ gleich der obengenannten Bedeutung, wobei -O- besonders bevorzugt ist.

Bevorzugt handelt es sich bei e in Formel (III) um 0 oder 1.

Bevorzugt handelt es sich bei f in Formel (III) um 1, 2 oder 3.

Bevorzugt handelt es sich bei g um 0 oder eine ganze Zahl von 1 bis 10, besonders bevorzugt um 1 bis 5.

Bevorzugt handelt es sich bei h um 0 oder eine ganze Zahl von 1 bis 10, besonders bevorzugt um 0, 1 oder 3.

Die erfindungsgemäßen Organopolysiloxane haben bevorzugt eine Viskosität von 1,0 bis 30 000 000 mm²/s, besonders bevorzugt von 5,0 bis 60 000 mm²/s, jeweils bei 25°C.

Bei den erfindungsgemäßen Organopolysiloxane handelt es sich bevorzugt um solche, die nicht flüchtig sind und sehr niedrige Dampfdrücke aufweisen.

Die erfindungsgemäßen Organopolysiloxane sind bevorzugt in flüssigen Polydimethylsiloxanen homogen löslich.

Beispiele für die erfindungsgemäßen Organopolysiloxane sind niedermolekulare Organosiloxane, wie (H-C≡C-C(R³)(OH)-R⁴_{g}-X-R⁴ₕ)-SiMe₂-O-SiMe₃, cyclische Polydimethylsiloxane, die (H-C≡C-C(R³)(OH)-R⁴_{g}-X-R⁴ₕ)-SiR²- oder (H-C≡C-C(R³)(OH) - R⁴_{g}-X-R⁴ₕ)₂-Si-Gruppen enthalten oder höhermolekulare bis hochmolekulere lineare, verzweigte oder harzartige Polydimethylsiloxane mit endständigen (H-C≡C-C(R³)(OH) -R⁴_{g}-X-R⁴ₕ)R²₂SiO_{1/2}-Gruppen und/oder kettenständigen (H-C≡C-C(R³)(OH)-R⁴_{g}-X-R⁴ₕ)-Resten und Molekulargewichten von z.B. 5·10² g/mol, 10³ g/mol oder 10⁵ g/mol (mittels NMR bestimmtes Zahlenmittel), wobei R², R³, R⁴, X, g und h die oben angegebenen Bedeutungen haben.

Bevorzugt handelt es sich bei den erfindungsgemäßen Organopolysiloxanen um niedermolekulare alkinolfunktionelle Oligosiloxane, cyclische Polydimethylsiloxane, die (H-C≡C-C(R³)(OH)-R⁴_{g}-X¹-R⁴ₕ)-SiR²- oder (H-C≡C-C(R³)(OH)-R⁴_{g}-X¹-R⁴ₕ)₂-Si-Gruppen enthalten oder höhermolekulare lineare, verzweigte oder harzartige Polydimethylsiloxane, mit endständigen (H-C≡C-C(R³)(OH)-R⁴_{g}-X¹-R⁴ₕ)R²₂SiO_{1/2}-Gruppen und/oder kettenständigen (H-C≡C-C(R³)(OH)-R⁴_{g}-X¹-R⁴ₕ)-Resten und Molekulargewichten von z.B. 5·10² g/mol bis 6·10⁴ g/mol (mittels NMR bestimmtes Zahlenmittel) und X¹ gleich -O- oder -O(=O)- besonders bevorzugt um cyclische Polydimethylsiloxane, die (H-C≡C-C(R³)(OH)-R⁴_{g}-X¹-R⁴ₕ)-SiR²-Gruppen enthalten oder niedermolekulare oder höhermolekulare lineare, verzweigte oder harzartige Polydimethylsiloxane, mit endständigen (H-C≡C-C(R³)(OH)-R⁴_{g}-X¹-R⁴ₕ)R²₂SiO_{1/2}-Gruppen und/oder kettenständigen (H-C≡C-C(R³)(OH)-R⁴_{g}-X¹-R⁴ₕ)-Resten und Molekulargewichten von z.B. 5·10² g/mol bis 2·10⁴ g/mol (mittels NMR bestimmtes Zahlenmittel) und X¹ gleich -O-, wobei R², R³, R⁴, X, g und h die oben angegebenen Bedeutungen haben.

Die erfindungsgemäßen Alkinolgruppen aufweisenden Organopolysiloxane können nach beliebigen Methoden hergestellt werden.

Vorzugsweise werden die erfindungsgemäßen Organopolysiloxane mit X gleich -O-, -S-, -OC(=O)-, -N(R⁶)- oder -N(R⁶)-C(=O)- und h gleich 0 durch Umsetzung von Si-Cl-Bindungen aufweisenden Organosiliciumverbindungen, wie Chlorsilanen bzw. Chlorsiloxanen, mit Alkinolen der allgemeinen Formel 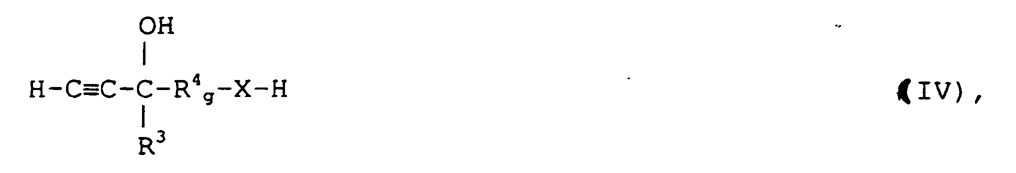 wobei R³, R⁴, X und g die oben angegebenen Bedeutungen haben, in Gegenwart von Basen, wie zum Beispiel Triethylamin, Pyridin oder Kaliumcarbonat, hergestellt (Verfahren 1). Bei der erfindungsgemäßen Umsetzung wird dabei vorteilhafterweise das Alkinol der Formel (IV), gegebenenfalls in einem Lösungsmittel gelöst, bei Temperaturen zwischen -50 und +50°C zuerst mit der Base versetzt und anschließend die Si-Cl-Bindungen aufweisenden Organosiliciumverbindungen, gegebenenfalls ebenfalls in einem Lösungsmittel gelöst, zugegeben.

Nach Beendigung der Reaktion wird vorteilhafterweise das Produkt vom Basen-Hydrochlorid und ggf. Lösungsmittel abgetrennt. Das Produkt kann, falls erwünscht, durch an sich bekannte Verfahren, wie durch Destillation, Umkristallisation oder Waschen mit Lösungsmitteln, gereinigt werden.

Des weiteren können die erfindungsgemäßen Organopolysiloxane mit X gleich O und h gleich Null vorzugsweise auch durch Umsetzung von Alkinolen der Formel (IV) mit X gleich O, also H-C≡C-C(OH)(R³)-R⁴_{g}-O-H, mit Organosiliciumverbindungen, welche OH- oder Organyloxy-Gruppen enthalten, gegebenfalls in Gegenwart von sauren oder basischen oder metallhaltigen Katalysatoren, hergestellt werden (Verfahren 2). Auch können die erfindungsgemäßen Organosiliciumverbindungen durch Umsetzung von nicht funktionalisierten Organosiloxanen mit H-C≡C-C(OH)(R³)-R⁴_{g}-O-H in Gegenwart von sauren, basischen oder metallhaltigen Katalysatoren erhalten werden.

Vorzugsweise werden die erfindungsgemäßen Organopolysiloxane mit X gleich -O-, -S-, -OC(=O)-, -N(R⁶)- oder -N(R⁶)-C(=O)- und h verschieden 0 durch Umsetzung von Alkinolen der allgemeinen Formel (IV) mit Organosiliciumverbindungen enthaltend Einheiten der Formel

(Y-R⁴ ₕ)ₑ R² _{f}SiO_{(4-e-f)/2} (V),

wobei Y gleich oder verschieden sein kann und F, Cl, Br, I, -OSO₂-C₆H₄-CH₃, -OSO₂-C₆H₄-Br oder -OSO₂-CF₃ bedeutet sowie R², R⁴, e, f und h die oben dafür angegebenen Bedeutungen haben, in Gegenwart von Basen, wie zum Beispiel Triethylamin, Pyridin, Kaliumcarbonat, Natriumhydrid oder BuLi, hergestellt (Verfahren 3). Dabei wird vorteilhafterweise das Alkinol der Formel (IV), gegebenenfalls in einem Lösungsmittel gelöst, bei Temperaturen zwischen -100 und +50°C zuerst mit der Base versetzt und anschließend die Organosiliciumverbindungen enthaltend Einheiten der Formel (V), gegebenenfalls ebenfalls in einem Lösungsmittel gelöst, bei Temperaturen zwischen -100 und + 150°C zugegeben.

Alternativ können die erfindungsgemäßen Organopolysiloxane durch Umsetzung von Alkinolen der Formel 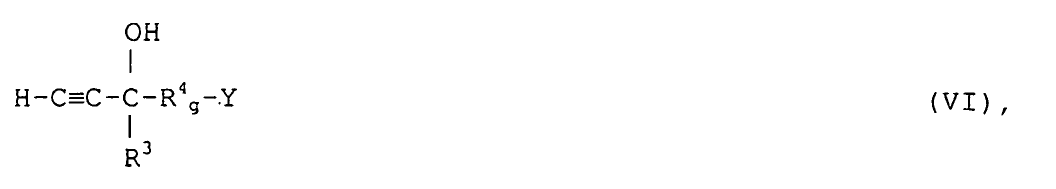 wobei Y, R³, R⁴ und g eine der oben dafür angegebenen Bedeutungen haben, mit Organosiliciumverbindungen enthaltend Einheiten der Formel

(H-X-R⁴ ₕ)ₑ R² _{f}SiO_{(4-e-f)/2} (VII),

wobei X, R², R⁴, e, f und h eine der oben dafür angegebenen Bedeutungen haben, hergestellt werden (Verfahren 4).

Die erfindungsgemäßen Organopolysiloxane mit X gleich -O-C(O)- können zudem vorteilhaft durch Umsetzung eines Säurechlorids oder Disäurechlorids mit einem Alkohol in Gegenwart von Basen erhalten werden.

Bei allen oben beschriebenen erfindungsgemäßen Verfahren können die nach Beendigung der erfindungsgemäßen Reaktionen erhaltenen Produkte, falls erwünscht, durch an sich bekannte Verfahren, wie durch Destillation, Umkristallisation oder Waschen mit Lösungsmitteln, gereinigt werden.

Bei allen oben beschriebenen erfindungsgemäßen Verfahren können die erhaltenen Organopolysiloxane anschließend in an sich bekannten Reaktionen, die für die Silan- und Siloxan-Chemie typisch sind, wie Equilibrierung, Ligandenaustausch, Umesterung, Dis- und Coproportionierung und Kondensation, weiter umgesetzt werden.

Die erfindungsgemäßen bzw. erfindungsgemäß hergestellten Organopolysiloxane können für alle Zwecke eingesetzt werden, für die auch bisher Organosiliciumverbindungen mit Alkingruppen eingesetzt worden sind. Insbesondere eignen sie sich zum Einsatz bei allen Verfahren zur Umsetzung von Si-gebundenen Wasserstoff aufweisenden Verbindungen mit aliphatische Kohlenstoff-Kohlenstoff-Mehrfachbindungen aufweisenden organischen oder siliciumorganischen Verbindungen in Gegenwart von Hydrosilylierungskatalysatoren.

Ein weiterer Gegenstand der vorliegenden Erfindung sind vernetzbare Massen, enthaltend
(A) Verbindungen, die Reste mit aliphatischen Kohlenstoff-Kohlenstoff-Mehrfachbindungen aufweisen,
(B) Organosiliciumverbindungen mit Si-gebundenen Wasserstoffatomen,
(C) Alkinolgruppen aufweisende Organopolysiloxanen enthaltend Einheiten der Formel (III) und
(D) die Anlagerung von Si-gebundenem Wasserstoff an aliphatische Mehrfachbindung fördernden Katalysator.

Die in den erfindungsgemäßen Massen eingesetzten Verbindungen (A) und (B) werden bekanntermaßen so gewählt, dass eine Vernetzung möglich ist. So weist beispielsweise Verbindung (A) mindestens zwei aliphatisch ungesättigte Reste auf und Siloxan (B) mindestens drei Si-gebundene Wasserstoffatome oder Verbindung (A) weist mindestens drei aliphatisch ungesättigte Reste auf und Siloxan (B) mindestens zwei Si-gebundene Wasserstoffatome.

Bei der erfindungsgemäß eingesetzten Verbindung (A) kann es sich um siliciumfreie organische Verbindungen mit vorzugsweise mindestens zwei aliphatisch ungesättigten Gruppen wie auch um Organosiliciumverbindungen mit vorzugsweise mindestens zwei aliphatisch ungesättigten Gruppen handeln. Beispiele für organische Verbindungen, die in den erfindungsgemäßen Massen als Komponente (A) eingesetzt werden können, sind 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5) und 4,5-Dimethyl-4,5-diethyl-octadien-(1,7), N,N'-Methylen-bis-(acrylsäureamid), 1,1,1-Tris(hydroxymethyl)-propan-triacrylat, 1,1,1-Tris(hydroxymethyl)-propan-trimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykol Diacrylat, Polyethylenglykol Dimethacrylat und Poly-(propylenglykol)methacrylat.

Vorzugsweise handelt es sich bei erfindungsgemäß eingesetzter Komponente (A) um aliphatisch ungesättigte Organosiliciumverbindungen, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der Formel

RₐR¹ _{b}SiO_{(4-a-b)/2} (I)

eingesetzt, wobei
**R** gleich oder verschieden sein kann und einen von aliphatischen Kohlenstoff-Kohlenstoff-Mehrfachbindungen freien Rest bedeutet,
**R**^{**1**} gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
**a** 0, 1, 2 oder 3 ist und
**b** 0, 1 oder 2 ist
mit der Maßgabe, dass die Summe a+b kleiner oder gleich 3 ist und im Durchschnitt mindestens 2 Reste R¹ je Molekül vorliegen.

Bei Rest **R** kann es sich um ein- oder mehrwertige Reste handeln, wobei die mehrwertigen Reste, wie bivalente, trivalente und tetravalente Reste, dann mehrere, wie etwa zwei, drei oder vier, Siloxy-Einheiten der Formel (I) miteinander verbinden.

**R** umfasst die einwertigen Reste -F, -Cl, -Br, -OR^{6'} und SiC-gebundene, gegebenenfalls substituierte Kohlenwasserstoffreste, die mit Sauerstoffatomen oder der Gruppe -C(O)- unterbrochen sein können, sowie zweiwertige, beidseitig gemäß Formel (I) Si-gebundene Reste, wobei R^{6'} gleich eine für R⁶ angegebene Bedeutung haben kann.

Falls es sich bei Rest **R** um SiC-gebundene, substituierte Kohlenwasserstoffreste handelt, sind als Substituenten Halogenatome, phosphorhaltige Reste, Cyanoreste, -OR^{6'}, -NR^{6'}-, -NR^{6'}₂ und -C₆F₅ mit R^{6'} gleich der obengenannten Bedeutung bevorzugt.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste **R** sind Halogenalkylreste, wie der 3,3,3-Trifluor-n-propylrest, der 2,2,2,2',2',2'-Hexafluorisopropylrest und der Heptafluorisopropylrest, Halogenarylreste, wie der o-, m- und p-Chlorphenylrest.

Beispiele für **R** gleich zweiwertige, beidseitig gemäß Formel (I) Si-gebundene Reste sind solche, die sich von den voranstehend für Rest **R** genannten einwertigen Beispiele dadurch ableiten, dass eine zusätzliche Bindung durch Substitution eines Wasserstoffatoms erfolgt. Beispiele für derartige Reste sind -(CH₂)ₒ-, -CH(CH₃)-, -C(CH₃)₂-, -CH(CH₃)-CH₂-, -C₆H₄-, -CH(Ph)-CH₂-, -C(CF₃)₂-, -(CH₂)ₒ-C₆H₄-(CH₂)ₒ-, -(CH₂)ₒ-C₆H₄-C₆H₄-(CH₂)ₒ-, -(CH₂O)ₚ-, -(CH₂CH₂O)ₚ-, -(CH₂)ₒ-O_{y}-C₆H₄-SO₂-C₆H₄-O_{y}-(CH₂)ₒ-, wobei y 0 oder 1 ist, o und p gleiche oder verschiedene ganze Zahlen von 0 bis 10 sind sowie Ph gleich Phenylrest ist.

Bevorzugt handelt es sich bei Rest **R** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest **R**^{**1**} kann es sich um beliebige, einer Anlagerungsreaktion (Hydrosilylierung) mit einer SiH-funktionellen Verbindung zugängliche Gruppen handeln.

Falls es sich bei Rest **R**^{**1**} um SiC-gebundene, substituierte Kohlenwasserstoffreste handelt, sind als Substituenten Halogenatome, Cyanoreste und -OR^{6'} bevorzugt, wobei R^{6'} eine der obengenannten Bedeutungen hat.

Bevorzugt handelt es sich bei Rest **R**^{**1**} um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt sind.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R¹R₂SiO_{1/2}, R¹RSiO_{2/2} und R₂SiO_{2/2} zusammengesetzt, wobei R und R¹ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R¹SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,6 bis 500 000 000 mm²/s, besonders bevorzugt von 10 bis 50 000 000 mm²/s, jeweils bei 25°C.

Als Organosiliciumverbindung (B) können alle hydrogenfunktionellen Organosiliciumverbindungen eingesetzt werden, die auch bisher in additionsvernetzbaren Massen eingesetzt worden sind. Selbstverständlich können auch Mischungen unterschiedlicher, den Kriterien des Bestandteils (B) genügende Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten.

Als Organosiliciumverbindungen (B), die Si-gebundene Wasserstoffatome aufweisen, werden vorzugsweise lineare, cyclische oder verzweigte Organopolysiloxane enthaltend Einheiten der Formel

R⁷ _{c}H_{d}SiO_{(4-c-d)/2} (II)

eingesetzt, wobei
**R**⁷ gleich oder verschieden sein kann und eine oben für Rest R angegebene Bedeutung hat,
**c** 0, 1, 2 oder 3 ist und
**d** 0, 1 oder 2 ist,
mit der Maßgabe, dass die Summe von c+d kleiner oder gleich 3 ist und im Mittel mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,01 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formel R⁷₃SiO_{1/2}, HR⁷₂SiO_{1/2}, HR⁷SiO_{2/2} und R⁷₂SiO_{2/2} zusammengesetzt, wobei R⁷ die vorstehend angegebene Bedeutung hat. Verzweigte und netzwerkartige Polysiloxane enthalten zusätzlich trifunktionelle und/oder tetrafunktionelle Einheiten, wobei solche der Formeln R⁷SiO_{3/2}, HSiO_{3/2} und SiO_{4/2} bevorzugt sind.

Besonders bevorzugt handelt es sich bei der erfindungsgemäß eingesetzten Komponente (B) um niedermolekulare, SiH-funktionelle Verbindungen, wie 1,1,3,3-Tetramethyldisiloxan, Tetrakis(dimethylsiloxy)silan, 1,1,1,3,5,5,5-Heptamethyltrisiloxan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 1 bis 1 000 000 mm²/s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Massen enthalten, dass das Molverhältnis von SiH-Gruppen zu aliphatisch ungesättigten Gruppen bei 0,1 bis 20, besonders bevorzugt zwischen 0,8 und 5,0, liegt.

Bei der erfindungsgemäß eingesetzten Komponente (C) handelt es sich bevorzugt um Alkinolgruppen aufweisende Organopolysiloxane enthaltend eine oder mehrere der Einheiten der Formel (H-C≡C-C(R³)(OH) -R⁴_{g}-X-R⁴ₕ)R²₂SiO_{1/2}, (H-C≡C-C(R³)(OH) -R⁴_{g}-X-R⁴ₕ)₂R²SiO_{1/2}, (H-C≡C-C(R³)(OH)-R⁴_{g}-X-R⁴ₕ)₃SiO_{1/2}, (H-C≡C-C(R³)(OH)-R⁴_{g}-X-R⁴ₕ)R²₁SiO_{2/2}, (H-C≡C-C(R³)(OH) -R⁴_{g}-X-R⁴ₕ)₂SiO_{2/2}, (H-C≡C-C(R³)(OH)-R⁴_{g}-X-R⁴ₕ)₁SiO_{3/2}, (H-C≡C-C(R³)(OH)-R⁴_{g}-O)R²₂SiO_{1/2} und (H-C≡C-C(R³)(OH)-R⁴_{g}-O)₂R²SiO_{1/2} sowie um Alkinolgruppen aufweisende Organopolysiloxane enthaltend eine oder mehrere der Einheiten der Formel (H-C≡C-C(R₃)(OH)-R⁴_{g}-O)₃SiO_{1/2}, (H-C≡C-C(R₃)(OH)-R⁴_{g}-O)R²₁SiO_{2/2}, (H-C≡C-C(R₃)(OH) -R⁴_{g}-O)₂SiO_{2/2}, (H-C≡C-C(R₃)(OH)-R⁴_{g}-O)₁SiO_{3/2}, R²₂SiO_{2/2}, R²₃SiO_{1/2} und R²SiO_{3/2}, wobei Alkinolgruppen aufweisende Organopolysiloxane enthaltend eine oder mehrere der Einheiten der Formel (H-C≡C-C(R³)(OH)-R⁴_{g}-X-R⁴)R²₂SiO_{1/2}, (H-C≡C-C(R³)(OH)-R⁴_{g}-X-R⁴)R²₁SiO_{2/2}, (H-C≡C-C(R³)(OH)-R⁴_{g}-X-R⁴)₁SiO_{3/2}, (H-C≡C-C(R³)(OH)-R⁴_{g}-O)R²₂SiO_{1/2}, (H-C≡C-C(R³)(OH) -R⁴_{g}-O)₃SiO_{1/2}, (H-C≡C-C(R³)(OH) -R⁴_{g}-O)₁SiO_{3/2}, (CH₃)₂SiO_{2/2}, (C₆H₅)₂SiO_{2/2}, (C₆H₅)₂SiO_{2/2}, (CF₃-CH₂-CH₂)₂SiO_{2/2} (CH₃)₃SiO_{1/2}, CH₃SiO_{3/2} besonders bevorzugt sind, mit R², R³, R⁴, g, h und X gleich eine der oben dafür angegebenen Bedeutungen.

Die erfindungsgemäßen Massen enthalten Bestandteil (C) in Mengen von bevorzugt 0,0001 bis 70 Gew.-%, besonders bevorzugt von 0,02 bis 10 Gew.-%, jeweils bezogen auf Bestandteil (A).

Die erfindungsgemäß eingesetzten Komponenten (A) und (B) sind handelsübliche Produkte bzw. nach in der Chemie gängigen Verfahren herstellbar.

Als erfindungsgemäß eingesetzte Komponente (D) können alle Katalysatoren verwendet werden, die auch bisher in durch Anlagerung von Si-gebundenem Wasserstoff an aliphatische Mehrfachbindung vernetzbaren Massen eingesetzt worden sind.

Bevorzugt handelt es sich bei den Komponente (D) um Hydrosilylierungskatalysatoren aus der Gruppe 8, 9 oder 10 im Periodensystem. Hierbei können Metalle und deren Verbindungen, wie Platin, Rhodium, Palladium, Eisen, Ruthenium und Iridium, vorzugsweise Platin, eingesetzt werden. Die Metalle können gegebenenfalls auf feinteiligen Trägermaterialien, wie Aktivkohle, Metalloxiden, wie Aluminiumoxid oder Siliciumdioxid, fixiert sein.

Vorzugsweise werden als Hydrosilylierungskatalysatoren (D) Platin und Platinverbindungen verwendet, wobei es sich besonders bevorzugt um solche Platinverbindungen handelt, die in Polyorganosiloxanen löslich sind. Als lösliche Platinverbindungen können beispielsweise die Platin-Olefin-Komplexe der Formeln (PtCl₂.Olefin)₂ und H(PtCl₃.Olefin) verwendet werden, wobei bevorzugt Alkene mit 2 bis 8 Kohlenstoffatomen, wie Ethylen, Propylen, Isomere des Butens und Octens oder Cycloalkane mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, wie z.B. (Ph₃P)₂PtCl₂. Besonders bevorzugt als Komponente (D) sind Komplexe des Platins mit Vinylsiloxanen, wie sym-Divinyltetramethyldisiloxan.

Die Menge des erfindungsgemäß eingesetzten Hydrosilylierungskatalysators (D) richtet sich nach der gewünschten Vernetzungsgeschwindigkeit und der jeweiligen Verwendung sowie ökonomischen Gesichtspunkten. Die erfindungsgemäßen Massen enthalten Platin-katalysatoren (D) vorzugsweise in solchen Mengen, dass ein Platingehalt von 0,05 bis 500 Gewichts-ppm (= Gewichtsteile je Million Gewichtsteile), besonders bevorzugt 0,5 bis 120 Gewichts-ppm, insbesondere 1 bis 50 Gewichts-ppm, jeweils bezogen auf das Gesamtgewicht der erfindungsgemäßen Masse, resultiert.

Außer den Komponenten (A) bis (D) können die erfindungsgemäßen härtbaren Zusammensetzungen noch alle weiteren Stoffe enthalten, die auch bisher zur Herstellung von additionsvernetzbaren Massen eingesetzt wurden.

Beispiele für verstärkende Füllstoffe, die als Komponente (E) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (E) liegt im Bereich von 0 bis 70 Gew.-%, vorzugsweise bei 0 bis 50 Gew.-%.

Die erfindungsgemäße Masse kann wahlweise als Bestandteil (F) weitere Zusätze zu einem Anteil von 0 bis 96 Gew.-%, vorzugsweise 0,0001 bis 40 Gew.-%, enthalten. Diese Zusätze können z.B. inaktive Füllstoffe, harzartige Polyorganosiloxane, die von den Organosiliciumverbindungen (A) und (B) verschieden sind und bevorzugt aus R₃SiO_{1/2}, SiO_{4/4} und/oder RSiO_{3/2} und gegebenenfalls R¹R₂SiO_{1/2} bestehen, wobei R und R¹ eine der obengenannten Bedeutungen hat, Dispergierhilfsmittel, Lösungsmittel, Haftvermittler, Pigmente, Farbstoffe, Weichmacher, organische Polymere, Hitzestabilisatoren, Füllstoffe für Wärmeleitfähigkeit usw. sein. Hierzu zählen Zusätze, wie Quarzmehl, Diatomeenerde, Tone, Kreide, Lithopone, Ruße, Graphit, Metalloxide, wie Aluminiumoxid und Siliciumoxid, Metallcarbonate, Nitride, wie Metallnitride und Bornitrid, Carbide, wie Borcarbid und Siliciumcarbid, Metallsulfate, Metallsalze von Carbonsäuren, Metallstäube, Fasern, wie Glasfasern und Kunststofffasern, Kunststoffpulver, Farbstoffe und Pigmente.

Enthalten sein können des weiteren Zusätze (G), die der weiteren gezielten Einstellung der Verarbeitungszeit, Anspringtemperatur und Vernetzungsgeschwindigkeit der erfindungsgemäßen Massen dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, niedermolekulare Siliconöle mit MethylvinylSiO_{2/2}-Gruppen und/oder R₂vinylSiO_{1/2}-Endgruppen, wie Divinyltetramethyldisiloxan, Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime.

Bevorzugt handelt es sich bei den erfindungsgemäßen Massen um solche, die
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen,
(C) Alkinolgruppen aufweisende Organopolysiloxane enthaltend Einheiten der Formel (III),
(D) die Anlagerung von Si-gebundenem Wasserstoff an aliphatische Mehrfachbindung fördernden Katalysator,
   gegebenenfalls
(E) verstärkende Füllstoffe,
   gegebenenfalls
(F) weitere Bestandteile
   enthalten.

Falls die erfindungsgemäßen Massen für Beschichtungen eingesetzt werden sollen, handelt es sich bevorzugt um solche, die
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen,
(C) Alkinolgruppen aufweisende Organopolysiloxane enthaltend Einheiten der Formel (III),
(D) die Anlagerung von Si-gebundenem Wasserstoff an aliphatische Mehrfachbindung fördernden Katalysator,
(E) pyrogene oder gefällte Kieselsäuren mit BET-Oberflächen von mindestens 50 m²/g und /oder
(F) harzartige Poldimethylsiloxane, welche aus R₃SiO_{1/2}, SiO_{4/4} und gegebenenfalls R¹R₂SiO_{1/2} aufgebaut sind, enthalten.

Besonders bevorzugt handelt es sich bei den erfindungsgemäßen Massen um solche, die aus
(A) im wesentlichen linearen Verbindungen, die im Mittel mindestens zwei Reste mit aliphatischen Kohlenstoff-Kohlenstoff-Mehrfachbindungen aufweisen,
(B) Organopolysiloxanen mit im Mittel mindestens zwei Si-gebundenen Wasserstoffatomen,
(C) Alkinolgruppen aufweisenden Organopolysiloxanen enthaltend Einheiten der Formel (III),
(D) die Anlagerung von Si-gebundenem Wasserstoff an aliphatische Mehrfachbindung fördernden Katalysatoren,
   gegebenenfalls
(E) verstärkenden Füllstoffen,
   gegebenenfalls
(F) weiteren Bestandteilen sowie
   gegebenenfalls
(G) Inhibitoren und/oder Stabilisatoren
   bestehen.

Die erfindungsgemäßen Massen können, falls erwünscht, in Flüssigkeiten gelöst, dispergiert, suspendiert oder emulgiert werden. Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Massen der Fall sein kann. Insbesondere können die erfindungsgemäßen Massen, falls sie hochviskos sind, in Form eines Granulates zubereitet werden. Hierbei kann das einzelne Granulatteilchen alle Komponenten enthalten oder die erfindungsgemäß eingesetzten Komponenten (D) und (B) sind getrennt in verschiedenen Granulatteilchen eingearbeitet.

Die Herstellung der erfindungsgemäßen Massen kann nach bekannten Verfahren erfolgen, wie beispielsweise durch gleichmäßiges Vermischen der einzelnen Komponenten. Die Vermischung erfolgt dabei vorzugsweise abhängig von der Viskosität von (A), z.B. mit einem Rührer, in einem Dissolver, auf einer Walze oder in einem Kneter.

Bei den erfindungsgemäß eingesetzten Komponenten (A) bis (G) kann es sich jeweils um eine einzelne Art einer solchen Komponente, wie auch um ein Gemisch aus mindestens zwei verschiedenen Arten einer solchen Komponente handeln.

Die erfindungsgemäßen, durch Anlagern von Si-gebundenem Wasserstoff an aliphatische Mehrfachbindungen, vernetzbaren Massen können unter den gleichen Bedingungen vernetzen gelassen werden wie die bisher bekannten durch Hydrosilylierungsreaktion vernetzbaren Massen. Vorzugsweise handelt es sich dabei um Temperaturen von 50 bis 220°C, besonders bevorzugt von 100 bis 190°C, und einem Druck der umgebenden Atmosphäre, also etwa von 900 bis 1100 hPa. Es können aber auch höhere oder niedrigere Temperaturen und Drücke angewendet werden. Die Vernetzung kann auch photochemisch mit energiereicher Strahlung, wie z.B. sichtbarem Licht mit kurzen Wellenlängen und UV-Licht, oder mit einer Kombination aus thermischer und photochemischer Anregung durchgeführt werden.

Ein weiterer Gegenstand der vorliegenden Erfindung sind Formkörper hergestellt durch Vernetzung der erfindungsgemäßen Massen.

Die elastomeren Eigenschaften der erfindungsgemäßen Formkörper umfassen gleichfalls das gesamte Spektrum, beginnend bei extrem weichen Silicongelen über gummiartige Materialien bis hin zu hochvernetzten Siliconen mit glasartigem Verhalten.

Die erfindungsgemäßen Massen sowie die erfindungsgemäß daraus hergestellten Vernetzungsprodukte können für alle Zwecke eingesetzt werden, für die auch bisher zu Elastomeren vernetzbare Organopolysiloxanmassen bzw. Elastomere verwendet wurden. Dies umfasst beispielsweise die Siliconbeschichtung bzw. Imprägnierung beliebiger Substrate, die Herstellung von Formteilen, z.B. im Spritzgussverfahren, Vakuumextrusionsverfahren, Extrusionsverfahren, Formgießen und Formpressen, Abformungen sowie die Verwendung als Dicht-, Einbett- und Vergussmassen.

Die erfindungsgemäßen Alkinolgruppen aufweisenden Organopolysiloxane haben den Vorteil, dass sie in flüssigen Organopolysiloxanen löslich sind.

Des weiteren haben die erfindungsgemäßen Alkinolgruppen aufweisenden organopolysiloxane den Vorteil, dass mit geeigneten Katalysatoren Alkin-Oligomerisierungen und Alkin-Metathesereaktionen durchführbar sind.

Des weiteren haben die erfindungsgemäßen Alkinolgruppen aufweisenden Organopolysiloxane den Vorteil, dass sie thermisch zu Elastomeren vernetzt werden können.

Des weiteren haben die erfindungsgemäßen Alkinolgruppen aufweisenden Organopolysiloxane den Vorteil, dass sie mit Alkin-Oligomerisierungskatalysatoren zu Elastomeren vernetzt werden können.

Ferner haben die erfindungsgemäßen Alkinolgruppen aufweisenden Organopolysiloxane den Vorteil, dass sie durch Alkin-Alkohol-Additionsreaktionen zu Elastomeren vernetzt werden können.

Die erfindungsgemäßen Alkinolgruppen aufweisenden Oganopolysiloxane haben den Vorteil, dass mit ihrem Einsatz Siliconmassen erhalten werden, die lange Topfzeiten im Bulk und/oder in dünnen Schichten bei Raumtemperatur in Kombination mit schnellen Vernetzungsgeschwindigkeiten bei erhöhten Temperaturen aufweisen und deren Topfzeiten und Vernetzungscharakteristika unabhängig von der Lagerung sind.

Die in den erfindungsgemäßen Massen eingesetzten Alkinolgruppen aufweisenden Organopolysiloxane haben den Vorteil, dass sie schwer flüchtig sind und einen niedrigen Dampfdruck aufweisen.

Die erfindungsgemäßen Massen haben den Vorteil, dass sie sowohl in dünnen Schichten, als auch im Bulk lange Topfzeiten bei Raumtemperatur aufweisen. Die erfindungsgemäßen Massen haben des weiteren den Vorteil, dass sie bei erhöhten Temperaturen zügig vernetzen.

Ferner haben die erfindungsgemäßen Massen den Vorteil, dass sie lagerstabil sind und sich die Vernetzungscharakteristik während einer Lagerung bei Raumtemperatur und Umgebungsdruck nicht verändert.

Die erfindungsgemäßen Massen haben den Vorteil, dass diese bei zweikomponentiger Formulierung nach Vermischen der beiden Komponenten eine vernetzungsfähige Masse ergeben, deren Verarbeitbarkeit über einen langen Zeitraum hinweg bei 25°C und Umgebungsdruck bestehen bleibt und die erst bei erhöhter Temperatur rasch vernetzt.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25°C.
**Vi** bedeutet Vinylrest,
**Me** bedeutet Methylrest und
**Ph** bedeutet Phenylrest.
**d**: Tage
**s**: Sekunden

### Beispiel 1

### Herstellung eines Alkinolgruppen aufweisenden Siloxans (Inhibi tor 1)

10 Teile 3-Methyl-1-butin-3,4-diol, hergestellt nach D. Miller, *J. Chem. Soc.* (C) (1969) 12-15, und 10,4 Teile Triethylamin wurden mit 75 ml Toluol versetzt. Bei einer Temperatur von 0°C wurden 138 Teile Chlorsiloxan in 75 ml Toluol gelöst innerhalb von 40 Minuten zugetropft. Beim Chlorsiloxan handelte es sich gemäß ¹H- und ²⁹Si-NMR um ein Siloxan-Polymer, bestehend aus -O-Si(Me)₂-, -O-SiCl(Me)₂ und -O-Si(Me)₃ Einheiten im Molverhältnis 17,7:1,01:0,99.
Die Reaktionsmischung wurde anschließend 4 Stunden bei Raumtemperatur gerührt, bevor sie filtriert wurde, um ausgefallenes Triethylammoniumchlorid abzutrennen. Zuletzt wurde das Toluol im Vakuum bei Raumtemperatur entfernt.
Gemäß der ¹H- NMR- und ²⁹Si-NMR-Spektren handelt es sich bei dem Reaktionsprodukt um ein alkinolgruppen-haltiges Siloxanpolymer, bestehend aus -O-Si(Me)₂-, -O-Si(-O-CH₂-C(OH) (CH₃)-C≡C-H)(Me)₂ und -O-Si(Me)₃ Einheiten im Molverhältnis 27,1:0,85:1,15.

### Beispiel 2

50,0 Teile eines Vinyldimethylsiloxy-terminierten Polydimethylsiloxans mit einer Viskosität von 20 Pa·s, 0,637 Teile Inhibitor 1 (das entspricht 92 Mol Alkinol pro mol Platin) und 1,0 Teile SiH-Vernetzer wurden bei Raumtemperatur mit Hilfe eines Rührers der Firma Janke & Kunkel IKA-Labortechnik, TYP RE 162 homogen vermischt, wobei der SiH-Vernetzer ein Mischpolymerisat aus Dimethylsiloxy- und Methylhydrogensiloxy- und Trimethylsiloxy-Einheiten mit einer Viskosität von 330 mPa·s und einem Gehalt an Si-gebundenem Wasserstoff von 0,46 Gew.-% war. Anschließend wurden 0,051 Teile Karstedt-Katalyator (bezogen auf den Platingehalt: ca. 1%-ige Lösung in Toluol) eingerührt. Bei dem Karstedt-Katalysator handelt es sich um einen Platin-1,3-Divinyl-1,1,3,3-tetramethyldisiloxan-Komplex, der z.B. in J. Am. Chem. Soc. 1999, 121, 3693-3703 beschrieben ist.

### Vergleichsbeispiel 1

Die in Beispiel 2 beschriebene Verfahrensweise wird wiederholt mit der Abänderung, dass anstelle von Inhibitor 1 0,03 Teile 1-Ethinyl-1-cyclohexanol (das entspricht 92 Mol Alkinol pro mol Platin) eingerührt wurden.

### Vergleichsbeispiel 2

Die in Beispiel 2 beschriebene Verfahrensweise wird wiederholt mit der Abänderung, dass anstelle von Inhibitor 1 0,024 Teile 3-Methyl-1-butin-3,4-diol eingerührt wurden.

### Vergleichsbeispiel 3

Die in Beispiel 2 beschriebene Verfahrensweise wird wiederholt mit der Abänderung, dass anstelle von Inhibitor 1 0,047 Teile 3-Methyl-1-dodecin-3-ol eingerührt wurden.

### Beispiel 4

### Vernetzungs- und Topfzeitversuche

Die thermischen Härtungseigenschaften der in den Beispielen 2 und 6 sowie in den Vergleichsbeispielen 1, 2 und 3 hergestellten Siliconmassen wurden mit einem Dynamic Analyzer RDA II, der Fa. Rheometrics mit einer Aufheizkurve von 30 bis 200°C und mit einer Heizrate von 5°C/Minute gemessen. Die Zeit bzw. die Temperatur, die dem 50 %-Wert des maximalen Drehmomentes entspricht, wurde als t₅₀-Wert [min] bzw. T₅₀-Wert [°C] definiert. Zur quantitativen Ermittlung der Topfzeit (TZ) wurden die hergestellten Formulierungen jeweils bei Raumtemperatur (RT) und 50°C gelagert, wobei die Zeitdauer (gemessen in Tagen) bis zur Verdoppelung des Anfangswertes der Viskosität ermittelt wurde.

Die Dünnschichttopfzeiten (DTZ) wurden bestimmt, indem die Siliconmasse mit einem 100 µm Rakel auf eine Glasplatte aufgetragen und bei Raumtemperatur gelagert wurde. Bestimmt wurde die Zeitdauer, bis die jeweilige Masse nicht mehr klebrig war. Die Messergebnisse werden in Tabelle 1 dargestellt.

**Tabelle 1**

| Mischung | t₅₀[min] | T₅₀ [°C] | TZ bei 50°C | TZ bei RT | DTZ |
|---|---|---|---|---|---|
| Beispiel 2 | 19,0 | 120,5 | 2 d | 57 d | 12 d |
| Vergleichsbeispiel 1 | 18,8 | 119,4 | 0,5 d | 12 d | 0,2 d |
| Vergleichsbeispiel 2 | 20,1 | 125,9 | 1 d | 4 d | 1,5 d |
| Vergleichsbeispiel 3 | 19,9 | 125,1 | 1 d | 32 d | 1 d |
| Beispiel 6 | - | 127,4 | 4 d | 73 d | 18 d |

Wie aus Tabelle 1 hervorgeht, werden mit den Massen gemäß Beispiel 2 und 6 mit Abstand die längsten Topfzeiten erhalten und zwar sowohl bei der RT- als auch bei der 50°C- und bei der Dünnschicht-Lagerung, während die T₅₀- und t₅₀-Werte aller Proben in einem ähnlichen Bereich liegen.
Um den Einfluss der Flüchtigkeit der unterschiedlichen Inhibitoren auf die Topfzeit und Vernetzungscharakteristik bei Lägerung zu untersuchen, wurden die Mischungen aus Beispiel 2 und Vergleichsbeispiel 1, jeweils ohne den Karstedt-Katalysator hergestellt und 2 Monate in einem PE-Becher bei Raumtemperatur gelagert. Nach der Lagerung wurden die Mischungen mit dem Karstedt-Katalysator versetzt und die Härtungseigenschaften und Topfzeiten wurden anhand der oben beschriebenen Verfahrensweisen bestimmt. Die Ergebnisse sind in Tabelle 2 ersichtlich.

**Tabelle 2**

| Mischung | T ₅₀ [°C] | TZ bei 50°C | TZ bei RT | DTZ |
|---|---|---|---|---|
| Beispiel 2 nach Lagerung | 118,5 | 2 d | 53 d | 11 d |
| Vergleichsbeispiel 1 nach Lagerung | 114,1 | 0,2 d | 5 d | 0 d |

Wie aus der Tabelle ersichtlich ist, bleiben die Härtungseigenschaften und Topfzeiten im Falle der Massen gemäß Beispiel 2 relativ konstant, während beim Vergleichsbeispiel 1 bedingt durch die Flüchtigkeit des Inhibitors die Topfzeiten stark verkürzt werden.

### Beispiel 3

589,4 Teile eines Vinyldimethylsiloxy-terminierten Polydimethylsiloxans mit einer Brabender-Plastizität von 630 mkp entsprechend einer mittleren Molmasse von ca. 500000 g/mol wurden mit 252,6 Teile einer hydrophoben pyrogenen Kieselsäure mit einer Oberfläche nach BET von 300 m²/g und einem Kohlenstoffgehalt von 3,95 Gew.-%, die in Portionen zudosiert wurde, 4 Stunden in einem Kneter zu einer homogenen Masse vermischt.

500 Teile der so erhaltenen Grundmasse wurden auf einer Walze bei einer Temperatur von 20°C mit 5,4 Teile Inhibitor 1, 7,5 Teile SiH-Vernetzer und 0,002 Teile Karstedt-Katalysator (1 %-ig bezogen auf Platin in Toluol gelöst) zu einer homogenen Masse vermischt, wobei der SiH-Vernetzer ein Mischpolymerisat aus Dimethylsiloxy-, Methylhydrogensiloxy- und Trimethylsiloxy-Einheiten mit einer Viskosität von 310 mPa·s bei 25°C und einem Gehalt an Si-gebundenem Wasserstoff von 0,46 Gew.-% war.

### Vergleichsbeispiel 4

Die in Beispiel 3 beschriebene Verfahrensweise wird wiederholt mit der Abänderung, dass anstelle von Inhibitor 1 0,25 Teile 1-Ethinyl-1-cyclohexanol eingerührt wurden. Somit liegen in Beispiel 3 und Vergleichsbeispiel 4 die gleichen molaren Mengen an Altinol-Gruppen vor.

Die thermischen Härtungseigenschaften der in den Beispiel 3 und Vergleichsbeispiel 4 hergestellten Siliconmassen wurden mit einem Goettfert-Elastograph gemessen.
Zur quantitativen Ermittlung der Lagerbarkeit wurden die hergestellten Formulierungen bei Raumtemperatur (RT) und 50°C gelagert, wobei die Zeitdauer (gemessen in Tagen) bis zur Verdoppelung des Anfangswertes der Viskosität ermittelt wurde. Die Messergebnisse werden in Tabelle 3 dargestellt.

**Tabelle 3**

| Mischung | a_{T} [°C] | t₉₀ [s] | TZ bei 50°C | TZ bei RT |
|---|---|---|---|---|
| Beispiel 3 | 119 | 30 | 5 d | 82 d |
| Vergleichsbeispiel 4 | 118 | 31 | 1,5 d | 8 d |

Die Anspringtemperatur a_{T} wurde mit einer Heizrate von 10°C/min bestimmt. Die Temperatur, die dem 4%-Wert des maximalen Drehmomentes entspricht, wurde als Anspringtemperatur definiert.
Die Bestimmung des t₉₀-Wertes erfolgte nach DIN 53529 T3. Die Dauer vom Beginn der Härtung bis 90% (t₉₀-Wert) des maximalen Drehmoments wurde dabei bei 180°C ermittelt.

Wie aus Tabelle 3 ersichtlich ist, weisen die Massen gemäß Beispiel 3 bei ähnlichen Vernetzungscharakteristiken wesentlich längere Topfzeiten auf.

### Beispiel 5

25,6 Teile H-C≡C-C(OH)(CH₃)-(CH₂)₃-OH, 33,2 Teile 3-Chlorpropyltrimethylsilan, 3,0 Teile Natriumjodid, 27,6 Teile Kaliumcarbonat, wasserfrei, und 200 Teile Methylethylketon, getrocknet, wurden vermischt und unter Stickstoffatmosphäre 48 Stunden unter Rückfluss erhitzt. Anschließend wurde auf Raumtemperatur abgekühlt, filtriert und das Filtrat im Ölpumpenvakuum bei Raumtemperatur eingeengt. Der Rückstand wurde im Vakuum fraktioniert destilliert. Laut NMR und MS weist die erhaltene Verbindung folgende Struktur auf: H-C≡C-C(OH)(CH₃)-(CH₂)₃-O-(CH₂)₃Si(CH₃)₃.

### Beispiel 6

In einem Laborkneter wurden 255 Teile eines Vinyldimethylsiloxy-terminierten Polydimethylsiloxans mit einer Viskosität von 20 000 mm²/s vorgelegt, auf 150°C aufgeheizt und mit 180 Teile einer hydrophoben pyrogenen Kieselsäure mit einer spezifischen Oberfläche nach BET von 300 m²/g und einem Kohlenstoffgehalt von 3,95 Gew.-%, versetzt. Es entstand eine hochviskose Masse, die anschließend mit 165 Teilen des oben genannten Polydimethylsiloxans verdünnt wurde. Durch Kneten unter Vakuum (10 mbar) bei 150°C wurden während einer Stunde flüchtige Bestandteile entfernt.
488,1 Teile der so hergestellten Grundmasse wurden auf der Walze mit 0,280 Teile Inhibitor aus Beispiel 5 (das entspricht 92 Mol Alkinol pro mol Platin), 10,95 Teile SiH-Vernetzer und 0,244 Teile Karstedt-Katalyator (bezogen auf Platin: 1%-ig in Toluol) zu einer homogenen Masse vermischt, wobei der SiH-Vernetzer ein Mischpolymerisat aus Phenylmethylsiloxy- und Methylhydrogensiloxy- und Trimethylsiloxy-Einheiten mit einer Viskosität von 400 mm²/s und einem Gehalt an Si-gebundenem Wasserstoff von 0,46 Gew.-% war.

## Patentansprüche

1. Alkinolgruppen aufweisende Organopolysiloxane enthaltend Einheiten der Formel 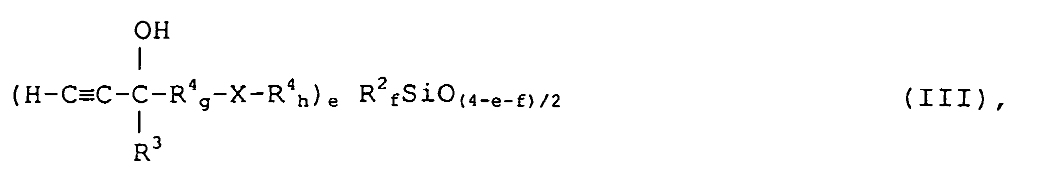 wobei
**R**^{**2**} gleich oder verschieden sein kann und Wasserstoffatom, Reste -OR⁵ oder gegebenenfalls substituierte Kohlenwasserstoffreste bedeutet,
**R**^{**3**} gleich oder verschieden sein kann und Wasserstoffatom, Halogenatom, Reste -OR⁵ oder einwertige, gegebenenfalls substituierte Kohlenwasserstoffreste bedeutet,
**R**^{**4**} gleich oder verschieden sein kann und ein zweiwertiger organischer Rest ist,
**X** gleich oder verschieden sein kann und -O-, -S-, -OC(=O)-, -N(R⁶)- oder -N(R⁶)-C(=O)- ist,
**R**^{**5**} gleich oder verschieden sein kann und Wasserstoffatom oder einwertige, gegebenenfalls substituierte Kohlenwasserstoffreste bedeutet,
**R**^{**6**} gleich oder verschieden sein kann und Wasserstoffatom oder einwertige, gegebenenfalls substituierte Kohlenwasserstoffreste bedeutet,
**e** 0, 1, 2 oder 3 ist,
**f** 0, 1, 2 oder 3 ist,
**g** 0 oder eine ganze Zahl ist und
**h** 0 oder eine ganze Zahl bedeutet,
mit der Maßgabe, dass die Summe e+f kleiner oder gleich 3 ist und die Organosiliciumverbindung mindestens eine Einheit der Formel (III) mit e verschieden Null aufweist.

2. Organosiliciumverbindungen gemäß Anspruch 1, **dadurch gekennzeichnet, dass** es sich bei X um -O- handelt.

3. Vernetzbare Massen, enthaltend
(A) Verbindungen, die Reste mit aliphatischen Kohlenstoff-Kohlenstoff-Mehrfachbindungen aufweisen,
(B) Organosiliciumverbindungen mit Si-gebundenen Wasserstoffatomen,
(C) Alkinolgruppen aufweisende Organopolysiloxane enthaltend Einheiten der Formel (III) und
(D) die Anlagerung von Si-gebundenem Wasserstoff an aliphatische Mehrfachbindung fördernden Katalysator.

4. Vernetzbare Massen gemäß Anspruch 3, **dadurch gekennzeichnet, dass** es sich bei Komponente (A) um aliphatisch ungesättigte Organosiliciumverbindungen handelt.

5. Vernetzbare Massen gemäß Anspruch 3 oder 4, **dadurch gekennzeichnet, dass** Bestandteil (C) in Mengen von 0,0001 bis 70 Gew.-%, bezogen auf Bestandteil (A), enthalten ist.

6. Vernetzbare Massen gemäß einem oder mehreren der Ansprüche 3 bis 5, **dadurch gekennzeichnet, dass**, es sich um solche handelt, die
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen,
(C) Alkinolgruppen aufweisende Organopolysiloxane enthaltend Einheiten der Formel (III),
(D) die Anlagerung von Si-gebundenem Wasserstoff an aliphatische Mehrfachbindung fördernden Katalysator,
gegebenenfalls
(E) verstärkende Füllstoffe,
gegebenenfalls
(F) weitere Bestandteile
enthalten.

7. Vernetzbare Massen gemäß einem oder mehreren der Ansprüche 3 bis 6, **dadurch gekennzeichnet, dass**, es sich um solche handelt, die aus
(A) im wesentlichen linearen Verbindungen, die im Mittel mindestens zwei Reste mit aliphatischen Kohlenstoff-Kohlenstoff-Mehrfachbindungen aufweisen,
(B) Organopolysiloxanen mit im Mittel mindestens zwei Si-gebundenen Wasserstoffatomen,
(C) Alkinolgruppen aufweisenden Organopolysiloxanen enthaltend Einheiten der Formel (III),
(D) die Anlagerung von Si-gebundenem Wasserstoff an aliphatische Mehrfachbindung fördernden Katalysatoren,
gegebenenfalls
(E) verstärkenden Füllstoffen,
gegebenenfalls
(F) weiteren Bestandteilen sowie
gegebenenfalls
(G) Inhibitoren und/oder Stabilisatoren
bestehen.

8. Formkörper hergestellt durch Vernetzung der Massen gemäß einem oder mehreren der Ansprüche 3 bis 7.

## Claims

1. Organopolysiloxanes having alkynol groups and comprising units of the formula 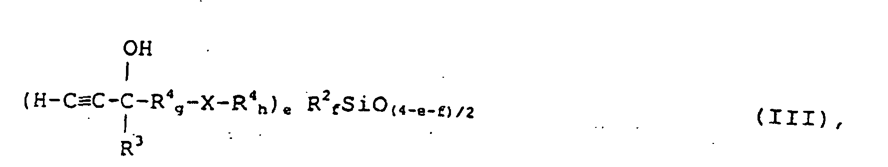 in which
**R**^{**2**} may be identical or different and are a hydrogen atom, -OR⁵ or optionally substituted hydrocarbon radicals,
**R**^{**3**} may be identical or different and are a hydrogen atom, a halogen atom, radicals -OR⁵ or monovalent, optionally substituted hydrocarbon radicals,
**R**^{**4**} may be identical or different and are a divalent organic radical,
**X** may be identical or different and are -O-, -S-, -OC(=O)-, -N(R⁶)- or -N(R⁶)-C(=O)-,
**R**^{**5**} may be identical or different and are a hydrogen atom or monovalent, optionally substituted hydrocarbon radicals,
**R**^{**6**} may be identical or different and are a hydrogen atom or monovalent, optionally substituted hydrocarbon radicals,
**e** is 0, 1, 2 or 3,
**f** is 0, 1, 2 or 3,
**g** is 0 or an integer and
**h** is 0 or an integer,
with the proviso that the sum e+f is less than or equal to 3 and the organosilicon compound has at least one unit of the formula (III) where e is not zero.

2. Organosilicon compounds according to Claim 1, **characterized in that** X is -O-.

3. Crosslinkable materials comprising
(A) compounds which have radicals having aliphatic carbon-carbon multiple bonds,
(B) organosilicon compounds having Si-bonded hydrogen atoms,
(C) organopolysiloxanes having alkynol groups and containing units of the formula (III) and
(D) a catalyst promoting the addition of Si-bonded hydrogen at an aliphatic multiple bond.

4. Crosslinkable materials according to Claim 3, **characterized in that** the component (A) comprises aliphatically unsaturated organosilicon compounds.

5. Crosslinkable materials according to Claim 3 or 4, **characterized in that** component (C) is contained in amounts of from 0.0001 to 70% by weight, based on component (A).

6. Crosslinkable materials according to one or more of Claims 3 to 5, **characterized in that** they are ones which contain
(A) compounds which have radicals having aliphatic carbon-carbon multiple bonds,
(B) organopolysiloxanes having Si-bonded hydrogen atoms,
(C) organopolysiloxanes having alkynol groups and containing units of the formula (III),
(D) a catalyst promoting the addition of Si-bonded hydrogen and an aliphatic multiple bond,
optionally
(E) reinforcing fillers,
optionally
(F) further components.

7. Crosslinkable materials according to one or more of Claims 3 to 6, **characterized in that** they are ones which consist of
(A) substantially linear compounds which have on average at least two radicals having aliphatic carbon-carbon multiple bonds,
(B) organopolysiloxanes having on average at least two Si-bonded hydrogen atoms,
(C) organopolysiloxanes having alkynol groups and containing units of the formula (III),
(D) catalysts promoting the addition of Si-bonded hydrogen at an aliphatic multiple bond,
optionally
(E) reinforcing fillers,
optionally
(F) further components and
optionally
(G) inhibitors and/or stabilizers.

8. Mouldings produced by crosslinking the materials according to one or more of Claims 3 to 7.

## Revendications

1. Organopolysiloxanes présentant des groupes alcynol contenant des unités de formule 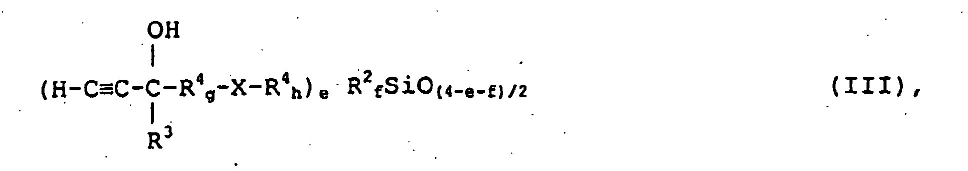 dans laquelle
R² peut être identique ou différent et signifie un atome d'hydrogène, des radicaux -OR⁵ ou des radicaux hydrocarbonés le cas échéant substitués,
R³ peut être identique ou différent et signifie un atome d'hydrogène, d'halogène, des radicaux -OR⁵ ou des radicaux hydrocarbonés monovalents, le cas échéant substitués,
R⁴ peut être identique ou différent et représente un radical organique divalent,
X peut être identique ou différent et représente -O-, -S-, -OC(=O)-, -N(R⁶)- ou -N(R⁶)-C(=O)-,
R⁵ peut être identique ou différent et signifie un atome d'hydrogène ou des radicaux hydrocarbonés monovalents, le cas échéant substitués,
R⁶ peut être identique ou différent et signifie un atome d'hydrogène ou des radicaux hydrocarbonés monovalents, le cas échéant substitués,
e vaut 0, 1, 2 ou 3,
f vaut 0, 1, 2 ou 3,
g vaut 0 ou un nombre entier et
h vaut 0 ou un nombre entier,
à condition que la somme e+f soit inférieure ou égale à 3 et que le composé organosilicié présente au moins une unité de formule (III) avec e différent de zéro.

2. Composés organosiliciés selon la revendication 1, **caractérisés en ce que** X représente -O-.

3. Masses réticulables contenant
(A) des composés qui présentent des radicaux avec des liaisons multiples carbone-carbone aliphatiques,
(B) des composés organosiliciés avec des atomes d'hydrogène liés par Si,
(C) des organopolysiloxanes présentant des groupes alcynol contenant des unités de formule (III) et
(D) un catalyseur favorisant l'addition d'hydrogène lié par Si sur une liaison multiple aliphatique.

4. Masses réticulables selon la revendication 3, **caractérisées en ce qu'**il s'agit, pour le composant (A) de composés organosiliciés aliphatiquement insaturés.

5. Masses réticulables selon la revendication 3 ou 4, **caractérisées en ce que** le constituant (C) est contenu en des quantités de 0,0001 à 70% en poids, par rapport au constituant (A).

6. Masses réticulables selon l'une ou plusieurs des revendications 3 à 5, **caractérisées en ce qu'**il s'agit de masses qui contiennent
(A) des composés qui présentent des radicaux avec des liaisons multiples carbone-carbone aliphatiques,
(B) des organopolysiloxanes avec des atomes d'hydrogène liés par Si,
(C) des organopolysiloxanes présentant des groupes alcynol contenant des unités de formule (III) et
(D) un catalyseur favorisant l'addition d'hydrogène lié par Si sur une liaison multiple aliphatique,
le cas échéant
(E) des charges renforçantes,
le cas échéant
(F) d'autres constituants.

7. Masses réticulables selon l'une ou plusieurs des revendications 3 à 6, **caractérisées en ce qu'**il s'agit de masses qui sont constituées par
(A) des composés essentiellement linéaires, qui présentent en moyenne au moins deux radicaux avec des liaisons multiples carbone-carbone aliphatiques,
(B) des organopolysiloxanes présentant en moyenne au moins deux atomes d'hydrogène liés par Si,
(C) des organopolysiloxanes présentant des groupes alcynol contenant des unités de formule (III)
(D) des catalyseurs favorisant l'addition d'hydrogène lié par Si sur des liaisons multiples aliphatiques,
le cas échéant
(E) des charges renforçantes,
le cas échéant
(F) d'autres constituants
ainsi que, le cas échéant
(G) des inhibiteurs et/ou des stabilisateurs.

8. Corps façonné préparé par réticulation des masses selon l'une ou plusieurs des revendications 3 à 7.
